# EUROPEAN PATENT SPECIFICATION

(11) **EP 4 209 827 B1**
(45) Date of publication and mention of the grant of the patent: **09.09.2026**
(21) Application number: 23150334.3
(22) Date of filing: 04.01.2023
(51) Int. Cl.: G02B 27/01

(54) **AUGMENTED REALITY HEAD-UP DISPLAY SYSTEM FOR VEHICLE, AND VEHICLE**
HEAD-UP-ANZEIGESYSTEM MIT ERWEITERTER REALITÄT FÜR FAHRZEUG UND FAHRZEUG
SYSTÈME D'AFFICHAGE TÊTE HAUTE À RÉALITÉ AUGMENTÉE POUR VÉHICULE, ET VÉHICULE

(30) Priority: 05.01.2022 CN 202210007021
(43) Date of publication of application: 12.07.2023
(73) Proprietor: Nio Technology (Anhui) Co., Ltd, Hefei City, Anhui 230601 (CN)
(72) Inventor: CHEN, Liang, Shanghai 201805 (CN); HU, Daoyuan, Shanghai 201805 (CN)
(74) Representative: Vossius & Partner Patentanwälte Rechtsanwälte mbB

(56) References cited:
- CN-A- 109 375 373
- FR-A1- 2 705 293
- US-A1- 2020 192 093

## Description

### Technical Field

The disclosure relates to the technical field of intelligent devices for vehicles, and particularly provides an augmented reality head-up display system for a vehicle, and a vehicle.

### Background Art

With continuous development of science and technology, vehicles are also developing in the direction of intelligent, comfortable and convenient vehicles.

In an augmented reality head-up display system for a vehicle in the prior art, an augmented reality image projection main optical head is usually arranged inside an augmented reality head-up controller host, a complete light path is formed by means of mutual cooperation of the augmented reality image projection main optical head, the augmented reality head-up controller host and a reflective imaging plate, and imaging is performed on the reflective imaging plate, so as to facilitate viewing by a driver.

However, the augmented reality head-up display system for a vehicle in the prior art usually has a large volume of the augmented reality head-up controller host, poor heat dissipation of the augmented reality image projection main optical head, a complex imaging light path, large space requirements for a dashboard, and poor imaging quality.

Chinese patent application publication CN 109 375 373 A discloses a split and head-up laser display system which includes a display body disposed in an on-board dashboard and an imaging device separate from the display and disposed on a windshield, wherein the display body includes a concave mirror that receives a light of imaging emitted by the imaging device and reflects the light of imaging to the windshield. US 2020/0192093 A1 or FR2705293Al each disclose an augmented reality head-up display device which is similar to the above split and head-up laser display system. However, these devices can't accurately track the quality of a focused image on the reflection mirror.

Accordingly, there is a need in the art for a new augmented reality head-up display system for a vehicle, and a vehicle, in order to solve the above problem.

### Summary

In order to solve the above problem in the prior art, i.e., to solve the problem of an augmented reality head-up display system for a vehicle in the prior art usually having a large volume of an augmented reality head-up controller host, poor heat dissipation of an augmented reality image projection main optical head, a complex imaging light path, large space requirements for a dashboard, and poor imaging quality, the disclosure provides an augmented reality head-up display system for a vehicle. The vehicle comprises a dashboard, and the augmented reality head-up display system comprises an augmented reality image projection main optical head, an augmented reality head-up controller host, and a reflective imaging plate. The augmented reality head-up controller host is arranged inside the dashboard, the augmented reality image projection main optical head is arranged outside the dashboard, the dashboard is further provided with a light path capable of allowing for light to enter and exit the dashboard, and light emitted by the augmented reality image projection main optical head is capable of passing through the light path to reach the augmented reality head-up controller host, continuing to pass, through light reflection in the augmented reality head-up controller host, out of the light path to reach the reflective imaging plate, and then achieving augmented reality head-up imaging through reflection of the reflective imaging plate.

In a preferred technical solution of the augmented reality head-up display system for a vehicle as described above, a first instrument is arranged on an outer side of the dashboard, and the augmented reality image projection main optical head is arranged on a back surface of the first instrument.

In a preferred technical solution of the augmented reality head-up display system for a vehicle as described above, the first instrument is configured to be capable of translating or rotating.

In the augmented reality head-up display system for a vehicle as described above and in accordance with the claimed invention, an auxiliary image projection following reflection plate is arranged on the augmented reality head-up controller host, and the light emitted by the augmented reality image projection main optical head passes, through reflection of the auxiliary image projection following reflection plate, out of the light path to reach the reflective imaging plate.

According to the claimed invention, a feedback camera for auxiliary position adjustment is further provided on a side edge of the augmented reality image projection main optical head.

In a preferred technical solution of the augmented reality head-up display system for a vehicle as described above, the reflective imaging plate is a front windshield; or the reflective imaging plate is a specular reflective film attached to the front windshield.

In a preferred technical solution of the augmented reality head-up display system for a vehicle as described above, the dashboard is an open dashboard, the light path is configured to be provided with a notch and a groove on the open dashboard, and a piece of light transmitting glass is arranged on the notch.

In a preferred technical solution of the augmented reality head-up display system for a vehicle as described above, the augmented reality image projection main optical head is arranged on a fixed structure, a translatable structure, or a rotatable structure on top of a head of a driver.

In a preferred technical solution of the augmented reality head-up display system for a vehicle as described above, the augmented reality head-up controller host has a volume set in an interval ranging from 0.2 L to 5 L.

The disclosure further provides a vehicle, including the augmented reality head-up display system for a vehicle of any one of the above technical solutions.

Those skilled in the art can understand that in the technical solutions of the disclosure, the vehicle includes the dashboard, and the augmented reality head-up display system includes the augmented reality image projection main optical head, the augmented reality head-up controller host and the reflective imaging plate, wherein the augmented reality head-up controller host is arranged inside the dashboard, the augmented reality image projection main optical head is arranged outside the dashboard, the dashboard is further provided with a light path capable of allowing for light to enter and exit the dashboard, and light emitted by the augmented reality image projection main optical head is capable of passing through the light path to reach the augmented reality head-up controller host, continuing to pass, through reflection in the augmented reality head-up controller host, out of the light path to reach the reflective imaging plate, and then forming an augmented reality head-up image through reflection of the reflective imaging plate.

With the above arrangement, the augmented reality head-up display system for a vehicle of the disclosure forms a complete light path by means of cooperation of the augmented reality image projection main optical head, the augmented reality head-up controller host, the reflective imaging plate and the light path, such that the light emitted by the augmented reality image projection main optical head can pass through the light path to reach the augmented reality head-up controller host, continues to pass, through reflection of the augmented reality head-up controller host, out of the light path to reach the reflective imaging plate, and forms a head-up image through reflection of the reflective imaging plate, so as to facilitate viewing by the driver. Moreover, the augmented reality head-up controller host is arranged inside the dashboard, the augmented reality image projection main optical head is arranged outside the dashboard, so as to achieve separate arrangement of the augmented reality image projection main optical head separated from the augmented reality head-up controller host, thereby reducing the volume of the augmented reality head-up controller host, so as to reduce space requirements for the interior of the dashboard, further avoiding the problem of a poor imagining effort caused by poor heat dissipation of the augmented reality image projection main optical head, and reducing the number of reflections of the light emitted by the augmented reality image projection main optical head inside the augmented reality head-up controller host, and simplifying the imaging light path, so as to further ensure high-dynamic and high-pixel imaging quality.

### Brief Description of the Drawings

An augmented reality head-up display system for a vehicle, and a vehicle of the disclosure are described below with reference to the accompanying drawings. In the figures:
FIG. 1 is a schematic structural diagram of an augmented reality head-up display system for a vehicle in the prior art;
FIG. 2 is a schematic structural diagram of an augmented reality head-up display system for a vehicle of the disclosure; and
FIG. 3 is a partial schematic structural diagram of a vehicle using the augmented reality head-up display system for a vehicle of the disclosure.

### List of reference signs:

1 - dashboard; 11 - first instrument;
2 - reflective imaging plate; 21 - front windshield;
3 - augmented reality image projection main optical head; 31 - feedback camera;
4 - augmented reality head-up controller host; 41 - auxiliary image projection following reflection plate;
5 - light path; 51 - notch; 52 - groove.

### Detailed Description of Embodiments

Preferred implementations of the disclosure are described below with reference to the accompanying drawings. Those skilled in the art should understand that these implementations are only used to explain the technical principles of the disclosure, and are not intended to limit the scope of protection of the disclosure. Those skilled in the art can make adjustments according to requirements, so as to adapt to specific application scenarios. For example, although an arrangement position of an augmented reality image projection main optical head is described by arranging the augmented reality image projection main optical head on a back surface of a first instrument as an example in the specification, the arrangement position of the augmented reality image projection main optical head in the disclosure is not limited thereto, as long as the arrangement position enables a complete light path to be formed between the augmented reality image projection main optical head, an augmented reality head-up controller host, a reflective imaging plate and a light path so as to satisfy imaging requirements, and enables the augmented reality head-up controller host to be arranged inside the dashboard, and the augmented reality image projection main optical head to be arranged outside the dashboard, so as to separate the augmented reality image projection main optical head from the augmented reality head-up controller host. For example, the augmented reality image projection main optical head may be arranged on a fixed structure on top of a head of a driver. For another example, the augmented reality image projection main optical head may also be arranged on a translatable structure on top of the head of the driver. For still another example, the augmented reality image projection main optical head may be also arranged on a rotatable structure on top of the head of the driver.

It should be noted that in the description of the disclosure, the term "first" is merely used for descriptive purposes and cannot be understood as indicating or implying relative importance.

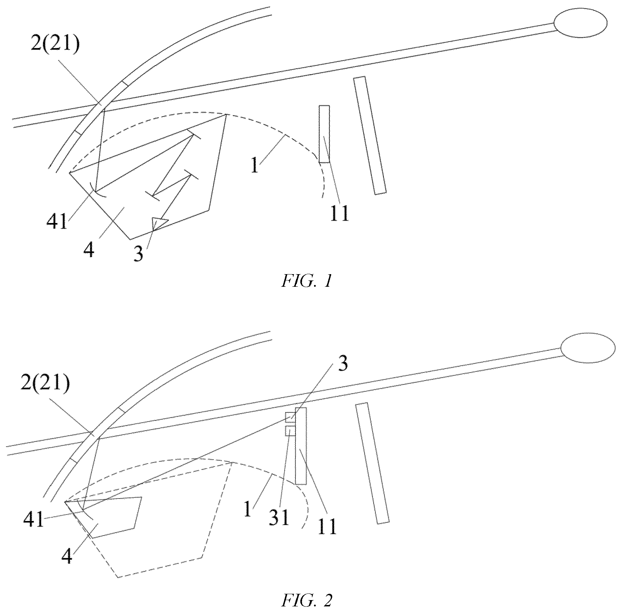

As shown in FIG. 1, in an augmented reality head-up display system for a vehicle in the prior art, an augmented reality image projection main optical head 3 is usually arranged inside an augmented reality head-up controller host 4, a complete light path is formed by means of mutual cooperation of the augmented reality image projection main optical head 3, the augmented reality head-up controller host 4 and a reflective imaging plate 2, and imaging is performed on the reflective imaging plate 2, such that a driver views high-pixel image information in a head-up manner.

In the prior art, the augmented reality image projection main optical head 3 is generally designed to be arranged inside the augmented reality heads-up controller host 4, so that the augmented reality head-up controller host 4 has an increased volume (the volume is usually about 10 L in the prior art), thereby increasing the space requirement for the dashboard 1. Moreover, since the augmented reality head-up controller host 4 constantly generates heats during operation, the augmented reality image projection main optical head 3 has poor heat dissipation and poor performance, and the generated heat also leads to a different internal air temperature and also a different refractive index, thereby reducing the imaging quality. Furthermore, thanks to the fact that the augmented reality image projection main optical head 3 is arranged inside the augmented reality head-up controller host 4, during imaging, light emitted by the augmented reality image projection main optical head 3 needs to be reflected for multiple times inside the augmented reality head-up controller host 4, and is then imaged on the reflective imaging plate 2, thereby increasing the complexity of an imaging light path, and further reducing the imaging quality.

Thus, the disclosure provides a new augmented reality head-up display system for a vehicle. An augmented reality head-up controller host 4 is arranged inside a dashboard 1, and an augmented reality image projection main optical head 3 is arranged outside the dashboard 1, to achieve a separate arrangement of the augmented reality image projection main optical head 3 separated from the augmented reality head-up controller host 4, such that the augmented reality head-up controller host 4 has a reduced volume (which may be generally designed to about 2 L, and has a significant volume change), thereby reducing space requirements for the interior of the dashboard 1, and further avoiding the problem of a poor imaging effect caused by poor heat dissipation of the augmented reality image projection main optical head 3. An air refractive index inside the augmented reality head-up controller host 4 may also be significantly improved due to the absence of a heating body, thereby improving the imaging quality to a certain extent. Furthermore, during imaging, the number of reflections of light emitted by the augmented reality image projection main optical head 3 inside the augmented reality head-up controller host 4 is reduced, thereby simplifying an imaging light path, and further improving the imaging quality.

With reference to FIG. 2, an augmented reality head-up display system for a vehicle of the disclosure is described in detail. FIG. 2 is a schematic structural diagram of an augmented reality head-up display system for a vehicle of the disclosure.

As shown in FIG. 2, in order to solve the above problem in the prior art, i.e., to solve the problem of an augmented reality head-up display system for a vehicle in the prior art usually having a large volume of an augmented reality head-up controller host, poor heat dissipation of an augmented reality image projection main optical head, a complex imaging light path, large space requirements for a dashboard, and poor imaging quality, the disclosure provides an augmented reality head-up display system for a vehicle. The vehicle comprises a dashboard 1, and the augmented reality head-up display system comprises an augmented reality image projection main optical head 3, an augmented reality head-up controller host 4, and a reflective imaging plate 2. The augmented reality head-up controller host 4 is arranged inside the dashboard 1, the augmented reality image projection main optical head 3 is arranged outside the dashboard 1, the dashboard 1 is further provided with a light path 5 capable of allowing for light to enter and exit the dashboard 1, and light emitted by the augmented reality image projection main optical head 3 can pass through the light path 5 to reach the augmented reality head-up controller host 4, continue to pass, through light reflection in the augmented reality head-up controller host 4, out of the light path 5 to reach the reflective imaging plate 2, and then achieve augmented reality head-up imaging through reflection of the reflective imaging plate 2.

With the above arrangement, the augmented reality head-up display system for a vehicle of the disclosure forms a complete light path by means of cooperation of the augmented reality image projection main optical head 3, the augmented reality head-up controller host 4, the reflective imaging plate 2 and the light path 5, such that the light emitted by the augmented reality image projection main optical head 3 can pass through the light path 5 to reach the augmented reality head-up controller host 4, continues to pass, through reflection of the augmented reality head-up controller host 4, out of the light path 5 to reach the reflective imaging plate 2, and forms an image through reflection of the reflective imaging plate 2, so as to facilitate viewing by the driver. Moreover, the augmented reality head-up controller host 4 is arranged inside the dashboard 1, the augmented reality image projection main optical head 3 is arranged outside the dashboard 1, so as to achieve separate arrangement of the augmented reality image projection main optical head 3 separated from the augmented reality head-up controller host 4, thereby reducing the volume of the augmented reality head-up controller host 4, so as to reduce space requirements for the interior of the dashboard 1, further avoiding the problem of a poor imagining effort caused by poor heat dissipation of the augmented reality image projection main optical head 3, and reducing the number of reflections of the light emitted by the augmented reality image projection main optical head 3 inside the augmented reality head-up controller host 4, and simplifying the imaging light path, so as to further improve the imaging quality.

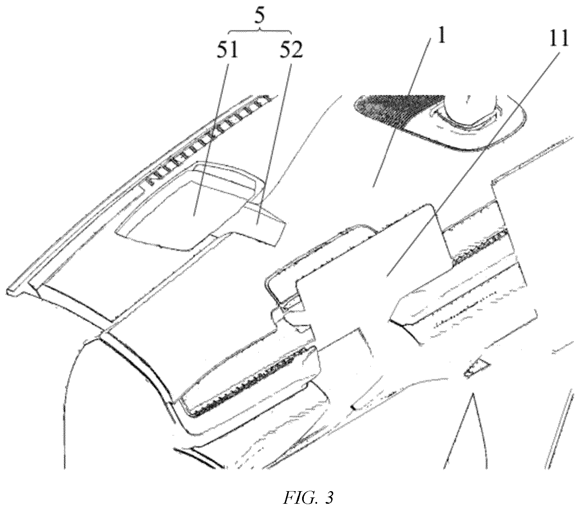

Further, with reference to FIGS. 2 and 3 below, the augmented reality head-up display system for a vehicle of the disclosure is described in detail.

As shown in FIGS. 2 and 3, in a possible implementation, a first instrument 11 is arranged on an outer side of the dashboard 1, and the augmented reality image projection main optical head 3 is arranged on a back surface of the first instrument 11.

With the above arrangement, the augmented reality head-up display system for a vehicle in this embodiment satisfies the requirements for arranging the augmented reality head-up controller host 4 inside the dashboard 1 and the augmented reality image projection main optical head 3 outside the dashboard 1 (that is, the augmented reality image projection main optical head 3 is arranged separately from the augmented reality head-up controller host 4) by arranging the augmented reality image projection main optical head 3 on the back surface of the first instrument 11, so as to reduce the volume of the augmented reality head-up controller host 4, thereby reducing space requirements for the dashboard 1, and further avoiding the problem of a poor imaging effect caused by poor heat dissipation of the augmented reality image projection main optical head 3. Furthermore, the light emitted by the augmented reality image projection main optical head 3 can be imaged on the reflective imaging plate 2 after being reflected once in the augmented reality head-up controller host 4. In this imaging process, the number of reflections of the light inside the augmented reality head-up controller host 4 is reduced, and the integral imaging light path is simplified, thereby improving the imaging quality.

As shown in FIG. 2, to facilitate adjustment of the position of a projected image in the reflective imaging plate 2, in this embodiment, the first instrument 11 is configured to be capable of translating or rotating.

With the above arrangement, thanks to the fact that the first instrument 11 is configured to be capable of translating or rotating, the position of the projected image in the reflective imaging plate 2 is convenient to adjust, thereby satisfying the requirements of a driver for adjusting the level of a horizontal position and a projection angle of the projected image, so as to satisfy use requirements of people having different heights or different seat heights.

It can be understood that although the arrangement position of the augmented reality image projection main optical head 3 is described by arranging the augmented reality image projection main optical head 3 on the back surface of the first instrument 11 as an example in this embodiment, the arrangement position of the augmented reality image projection main optical head 3 in this embodiment is not limited thereto, as long as the arrangement position enables a complete light path to be formed between the augmented reality image projection main optical head 3, the augmented reality head-up controller host 4, the reflective imaging plate 2 and the light path 5 so as to satisfy imaging requirements, and enables the augmented reality head-up controller host 4 to be arranged inside the dashboard 1, and the augmented reality image projection main optical head 3 to be arranged outside the dashboard 1, so as to separate the augmented reality image projection main optical head 3 from the augmented reality head-up controller host 4. For example, the augmented reality image projection main optical head 3 may be arranged on a fixed structure (not shown in the figures) on top of a head of the driver. For another example, the augmented reality image projection main optical head 3 may also be arranged on a translatable structure (not shown in the figures) on top of the head of the driver. For still another example, the augmented reality image projection main optical head 3 may be also arranged on a rotatable structure (not shown in the figures) on top of the head of the driver.

As shown in FIGS. 2-3, in order to improve the imaging quality of the projected image on the reflective imaging plate 2, in this embodiment, an auxiliary image projection following reflection plate 41 is arranged on the augmented reality head-up controller host 4, and the light emitted by the augmented reality image projection main optical head 3 pass, through reflection of the auxiliary image projection following reflection plate 41, out of the light path 5 to reach the reflective imaging plate 2.

With the above arrangement, the auxiliary image projection following reflection plate 41 is arranged on the augmented reality head-up controller host 4, to improve the focus accuracy of the augmented reality image projection main optical head 3 on the reflective imaging plate 2, so as to form a full-view reflected image, thereby improving the imaging quality of the projected image on the reflective imaging plate 2.

It should be noted that the full-view reflected image in this embodiment refers to an expanded imaging range, fro displaying .as much image information as possible on the reflective imaging plate 2.

As shown in FIG. 2, in order to further improve the imaging quality of the projected image on the reflective imaging plate 2, in this embodiment, a feedback camera 31 for auxiliary position adjustment is further provided on a side edge of the augmented reality image projection main optical head 3.

With the above arrangement, the augmented reality head-up display system for a vehicle in this embodiment is additionally provided with the feedback camera 31 for auxiliary position adjustment, so as to accurately track the quality of a focused image on the reflective imaging plate 2, to form continuous following control of the light path, thereby ensuring that the augmented reality image projection main optical head 3 can be accurately focused to the reflective imaging plate 2, so as to accurately focus the image to exclude ghosting defects of the image, thereby improving the imaging quality of the projected image on the reflective imaging plate 2.

It should be noted that in this embodiment, continuous following control of the light path refers to capturing an image of the real outside world by the feedback camera 31 in real time, comparing the image with an initial image on the reflective imaging plate 2 in real time, and performing real-time adjustment according to a comparison result, so as to accurately focus the image to exclude ghosting defects of the image, thereby improving the imaging quality of the projected image on the reflective imaging plate 2.

As shown in FIGS. 2-3, in a possible implementation, the reflective imaging plate 2 is a front windshield 21.

With the above arrangement, the light emitted by the augmented reality image projection main optical head 3 can pass through the light path 5 to reach the augmented reality head-up controller host 4, continues to pass, through reflection of the augmented reality head-up controller host 4, out of the light path 5 to reach the front windshield 21, and forms an image through reflection of the front windshield 21, such that the driver can view a clear and complete image on the front windshield 21.

In order to further increase the imaging resolution on the reflective imaging plate 2, in this embodiment, the reflective imaging plate 2 is a specular reflective film (not shown in the figures) attached to the front windshield 21.

In this embodiment, the reflective imaging plate 2 is configured as the specular reflective film and is attached to the front windshield 21, so as to further enhance a reflection effect of the light passing out of the light path 5 to reach the specular reflective film through reflection of the augmented reality head-up controller host 4, and to reduce a refraction effect, thereby further increasing the imaging resolution on the reflective imaging plate 2 and thus further improving the visual experience of the driver.

As shown in FIGS. 2-3, in a possible implementation, the dashboard 1 is an open dashboard (not shown in the figures), the light path 5 is configured to be provided with a notch 51 and a groove 52 on the open dashboard, and a piece of light transmitting glass (not shown in the figures) is arranged on the notch 51.

In this embodiment, the notch 51 is provided on the open dashboard, and the light transmitting glass is arranged on the notch 51, such that the light emitted by the augmented reality image projection main optical head 3 can enter the open dashboard through the notch 51, reach the augmented reality head-up controller host 4, and pass, through reflection of the augmented reality head-up controller host 4, out of the notch 51 to reach the reflective imaging plate 2, providing necessary hardware support for the light emitted by the augmented reality image projection main optical head 3 to enter and exit the open dashboard, such that the light can reach the augmented reality head-up controller host 4 and can be reflected by the augmented reality head-up controller host 4 to form an image. Moreover, in this embodiment, the provision of the groove 52 on the open dashboard provides a reasonable light avoidance effect, such that the light emitted by the augmented reality image projection main optical head 3 can better reach the augmented reality head-up controller host 4 in a process of entering the open dashboard and exiting the open dashboard, and the light reflected by the augmented reality head-up controller host 4 can better form an image on the reflective imaging plate 2, so as to further improve an imaging effect on the reflective imaging plate 2.

It should be noted that the open dashboard in this embodiment is a conventional closed dashboard provided with a notch 51 and a groove 52, so that the number of light beams entering and exiting the dashboard 1 is increased, thereby improving the imaging effect on the reflective imaging plate 2.

As shown in FIG. 2, in a possible implementation, the augmented reality head-up controller host 4 has a volume set in an interval ranging from 0.2 L to 5 L.

In this embodiment, thanks to the fact the augmented reality head-up controller host 4 has a volume set in an interval ranging from 0.2 L to 5 L, the volume of the augmented reality head-up controller host 4 is reduced to a certain extent, so as to reduce space requirements for the dashboard 1. Furthermore, the size of the projected image on the reflective imaging plate 2 is positively correlated to the volume of the augmented reality head-up controller host 4, the augmented reality head-up controller host 4 has the volume set in the interval ranging from 0.2 L to 5 L, and the volume of the augmented reality head-up controller host 4 is appropriately adjusted to increase the size of the projected image on the reflective imaging plate 2, thereby satisfying the requirements of a user for more display information. Moreover, the setting of the volume of the augmented reality head-up controller host 4 in the interval ranging from 0.2 L to 5 L improves a compactness effect of the augmented reality head-up controller host 4.

Thus, with the above arrangement, the size of the projected image on the reflective imaging plate 2 may be further considered while the volume of the augmented reality head-up controller host 4 is reduced, thereby better improving the user experience.

It should be noted that in this embodiment, the augmented reality head-up controller host 4 preferably has a volume of 2 L.

To sum up, the augmented reality head-up display system for a vehicle of the disclosure forms a complete light path by means of cooperation of the augmented reality image projection main optical head 3, the augmented reality head-up controller host 4, the reflective imaging plate 2 and the light path 5, such that the light emitted by the augmented reality image projection main optical head 3 can pass through the light path 5 to reach the augmented reality head-up controller host 4, continues to pass, through reflection of the augmented reality head-up controller host 4, out of the light path 5 to reach the reflective imaging plate 2, and forms an image through reflection of the reflective imaging plate 2, so as to facilitate viewing by the driver. Moreover, the augmented reality head-up controller host 4 is arranged inside the dashboard 1, the augmented reality image projection main optical head 3 is arranged outside the dashboard 1, so as to achieve separate arrangement of the augmented reality image projection main optical head 3 separated from the augmented reality head-up controller host 4, thereby reducing the volume of the augmented reality head-up controller host 4, so as to reduce space requirements for the interior of the dashboard 1, further avoiding the problem of a poor imagining effort caused by poor heat dissipation of the augmented reality image projection main optical head 3, and reducing the number of reflections of the light emitted by the augmented reality image projection main optical head 3 inside the augmented reality head-up controller host 4, simplifying the augmented reality imaging light path, and ensuring high-dynamic and high-pixel head-up projection imaging quality.

Moreover, thanks to the fact that the first instrument 11 is configured to be capable of translating or rotating, the position of the augmented reality projected image in the reflective imaging plate 2 is convenient to adjust, thereby satisfying the requirements of a driver for adjusting the level of a horizontal position and a projection angle of the augmented reality projected image, so as to satisfy use requirements of people having different heights or different seat heights.

Further, thanks to the fact that the auxiliary image projection following reflection plate 41 is arranged on the augmented reality head-up controller host 4 and the feedback camera 31 for auxiliary position adjustment is provided on the side edge of the augmented reality image projection main optical head 3, it is ensured that the augmented reality image projection main optical head 3 can be accurately focused to the reflective imaging plate 2, so as to accurately focus the image to exclude ghosting defects of the image, thereby improving the image quality of the projected image on the reflective imaging plate 2.

Moreover, thanks to the fact the augmented reality head-up controller host 4 has a volume set in an interval ranging from 0.2 L to 5 L, the volume of the augmented reality head-up controller host 4 is reduced to a certain extent, so as to reduce space requirements for the dashboard 1. Furthermore, the size of the projected image on the reflective imaging plate 2 is positively correlated to the volume of the augmented reality head-up controller host 4, the augmented reality head-up controller host 4 has the volume set **in** the interval ranging from 0.2 L to 5 L, and the volume of the augmented reality head-up controller host 4 is appropriately adjusted to increase the size of the projected image on the reflective imaging plate 2, thereby satisfying the head-up projection requirements of a user for more augmented reality display information.

It should be noted that the above implementations are only used to explain the principles of the disclosure, and are not intended to limit the scope of protection of the disclosure. Those skilled **in** the art can adjust the foregoing structures without departing from the principle of the disclosure, so that the disclosure is applicable to more specific application scenarios.

**In** addition, the disclosure further provides a vehicle having the augmented reality head-up display system for a vehicle of any one of the above implementations.

## Claims

1. An augmented reality head-up display system for a vehicle, wherein the vehicle comprises a dashboard (1), and the augmented reality head-up display system comprises an augmented reality image projection main optical head (3), an augmented reality head-up controller host (4), and a reflective imaging plate (2), wherein the augmented reality head-up controller host (4) is arranged inside the dashboard, the augmented reality image projection main optical head is arranged outside the dashboard (1), the dashboard (1) is further provided with a light path (5) capable of allowing for light to enter and exit the dashboard (1), and light emitted by the augmented reality image projection main optical head (3) is capable of passing through the light path (5) to reach the augmented reality head-up controller host (4), continuing to pass, through reflection in the augmented reality head-up controller host (4), out of the light path (5) to reach the reflective imaging plate (2), and then achieving augmented reality head-up imaging through reflection of the reflective imaging plate (2),
wherein an auxiliary image projection following reflection plate (41) is arranged on the augmented reality head-up controller host (4), and the light emitted by the augmented reality image projection main optical head (3) passes, through reflection of the auxiliary image projection following reflection plate (41), out of the light path to reach the reflective imaging plate (2),
**characterized in that** a feedback camera (31) for auxiliary position adjustment is further provided on a side edge of the augmented reality image projection main optical head (3); the feedback camera (31) captures an image of the real outside world in real time, compares the image with an initial image on the reflective imaging plate (2) in real time, and performs real-time adjustment according to a comparison result, so as to accurately focus the image to exclude ghosting defects of the image.

2. The augmented reality head-up display system for a vehicle according to claim 1, wherein a first instrument (11) is arranged on an outer side of the dashboard (1), and the augmented reality image projection main optical head (3) is arranged on a back surface of the first instrument (11).

3. The augmented reality head-up display system for a vehicle according to claim 2, wherein the first instrument (11) is configured to be capable of translating or rotating.

4. The augmented reality head-up display system for a vehicle according to claim 1, wherein the reflective imaging plate (2) is a front windshield (21); or
the reflective imaging plate (2) is a specular reflective film attached to the front windshield (21).

5. The augmented reality head-up display system for a vehicle according to claim 1, wherein the dashboard (1) is an open dashboard, the light path (5) is configured to be provided with a notch (51) and a groove (52) on the open dashboard, and a piece of light transmitting glass is arranged on the notch (51).

6. The augmented reality head-up display system for a vehicle according to claim 1, wherein the augmented reality image projection main optical head (3) is arranged on a fixed structure, a translatable structure, or a rotatable structure on top of a head of a driver.

7. The augmented reality head-up display system for a vehicle according to claim 1, wherein the augmented reality head-up controller host (4) has a volume set in an interval ranging from 0.2 L to 5 L.

8. A vehicle, comprising the augmented reality head-up display system for a vehicle of any one of claims 1-7.

## Patentansprüche

1. Head-up-Anzeigesystem mit erweiterter Realität für ein Fahrzeug, wobei das Fahrzeug ein Armaturenbrett (1) umfasst und das Head-up-Anzeigesystem mit erweiterter Realität einen Hauptoptikkopf (3) zur Bildprojektion mit erweiterter Realität, einen Head-up-Controller-Host (4) mit erweiterter Realität und eine reflektierende Bildgebungsplatte (2) umfasst, wobei der Head-up-Controller-Host (4) mit erweiterter Realität innerhalb des Armaturenbretts angeordnet ist, der Hauptoptikkopf zur Bildprojektion mit erweiterter Realität außerhalb des Armaturenbretts (1) angeordnet ist, das Armaturenbrett (1) ferner mit einem Lichtpfad (5) versehen ist, der in der Lage ist, zu ermöglichen, dass Licht in das Armaturenbrett (1) eintritt und aus diesem austritt, und Licht, das durch den Hauptoptikkopf (3) zur Bildprojektion mit erweiterter Realität emittiert wird, in der Lage ist, durch den Lichtpfad (5) zu gelangen, um den Head-up-Controller-Host (4) mit erweiterter Realität zu erreichen, weiterhin durch Reflexion in dem Head-up-Controller-Host (4) mit erweiterter Realität aus dem Lichtpfad (5) zu gelangen, um die reflektierende Bildgebungsplatte (2) zu erreichen, und dann Head-up-Bildgebung mit erweiterter Realität durch Reflexion der reflektierenden Bildgebungsplatte (2) zu erzielen,
wobei eine zusätzliche Bildprojektion-Folgereflexionsplatte (41) auf dem Head-up-Controller-Host (4) mit erweiterter Realität angeordnet ist und das Licht, das durch den Hauptoptikkopf (3) zur Bildprojektion mit erweiterter Realität emittiert wird, durch Reflexion der zusätzliche Bildprojektion-Folgereflexionsplatte (41) aus dem Lichtpfad gelangt, um die reflektierende Bildgebungsplatte (2) zu erreichen,
**dadurch gekennzeichnet, dass** ferner eine Rückkopplungskamera (31) zur zusätzlichen Positionsanpassung an einer Seitenkante des Hauptoptikkopfs (3) zur Bildprojektion mit erweiterter Realität bereitgestellt ist; die Rückkopplungskamera (31) ein Bild der realen Außenwelt in Echtzeit erfasst, das Bild mit einem Anfangsbild auf der reflektierenden Bildgebungsplatte (2) in Echtzeit vergleicht und eine Echtzeitanpassung gemäß einem Vergleichsergebnis durchführt, um das Bild genau zu fokussieren, um Geisterfehler des Bildes auszuschließen.

2. Head-up-Anzeigesystem mit erweiterter Realität für ein Fahrzeug nach Anspruch 1, wobei ein erstes Instrument (11) auf einer Außenseite des Armaturenbretts (1) angeordnet ist und der Hauptoptikkopf (3) zur Bildprojektion mit erweiterter Realität auf einer Rückfläche des ersten Instruments (11) angeordnet ist.

3. Head-up-Anzeigesystem mit erweiterter Realität für ein Fahrzeug nach Anspruch 2, wobei das erste Instrument (11) dazu konfiguriert ist, in der Lage zu sein, sich zu verschieben oder zu drehen.

4. Head-up-Anzeigesystem mit erweiterter Realität für ein Fahrzeug nach Anspruch 1, wobei die reflektierende Bildgebungsplatte (2) eine Windschutzscheibe (21) ist; oder
die reflektierende Bildplatte (2) ein spiegelnder reflektierender Film ist, der an der Windschutzscheibe (21) befestigt ist.

5. Head-up-Anzeigesystem mit erweiterter Realität für ein Fahrzeug nach Anspruch 1, wobei das Armaturenbrett (1) ein offenes Armaturenbrett ist, der Lichtpfad (5) dazu konfiguriert ist, mit einer Kerbe (51) und einer Nut (52) auf dem offenen Armaturenbrett versehen zu sein, und ein Stück lichtdurchlässiges Glas auf der Kerbe (51) angeordnet ist.

6. Head-up-Anzeigesystem mit erweiterter Realität für ein Fahrzeug nach Anspruch 1, wobei der Hauptoptikkopf (3) zur Bildprojektion mit erweiterter Realität auf einer festen Struktur, einer verschiebbaren Struktur oder einer drehbaren Struktur auf einem Kopf eines Fahrers angeordnet ist.

7. Head-up-Anzeigesystem mit erweiterter Realität für ein Fahrzeug nach Anspruch 1, wobei der Head-up-Controller-Host (4) mit erweiterter Realität ein Volumen aufweist, das in einem Intervall im Bereich von 0,2 l bis 5 l eingestellt ist.

8. Fahrzeug, welches das Head-up-Anzeigesystem mit erweiterter Realität für ein Fahrzeug nach einem der Ansprüche 1-7 umfasst.

## Revendications

1. Système d'affichage tête haute en réalité augmentée pour véhicule, dans lequel le véhicule comprend un tableau de bord (1) et le système d'affichage tête haute en réalité augmentée comprend une tête optique principale (3) de projection d'images en réalité augmentée, un hôte (4) de contrôleur tête haute en réalité augmentée, et une plaque d'imagerie réfléchissante (2), l'hôte (4) de contrôleur de tête haute en réalité augmentée étant agencé à l'intérieur du tableau de bord, la tête optique principale de projection d'image en réalité augmentée étant agencée à l'extérieur du tableau de bord (1), le tableau de bord (1) étant en outre pourvu d'un chemin de lumière (5) capable de permettre à la lumière d'entrer et de sortir du tableau de bord (1), et de la lumière émise par la tête optique principale (3) de projection d'images en réalité augmentée étant capable de traverser le chemin de lumière (5) pour atteindre l'hôte (4) de contrôleur tête haute en réalité augmentée, continuer, par réflexion dans l'hôte (4) de contrôleur tête haute en réalité augmentée, pour sortir du chemin de lumière (5) pour atteindre la lame d'imagerie réfléchissante (2), puis réaliser une imagerie tête haute en réalité augmentée par réflexion de la lame d'imagerie réfléchissante (2),
une plaque de réflexion (41) après la projection d'image auxiliaire étant agencée sur l'hôte (4) de commande de tête haute en réalité augmentée, et la lumière émise par la tête optique principale (3) de projection d'image en réalité augmentée, par réflexion de la plaque de réflexion (41) après la projection d'image auxiliaire, sortant du chemin de lumière pour atteindre la plaque d'imagerie réfléchissante (2),
**caractérisé en ce qu'**une caméra à retour (31) pour le réglage de position auxiliaire est en outre prévue sur un bord latéral de la tête optique principale (3) de projection d'images en réalité augmentée ; la caméra de rétroaction (31) capturant une image du monde extérieur réel en temps réel, comparant l'image avec une image initiale sur la plaque d'imagerie réfléchissante (2) en temps réel, et effectuant un ajustement en temps réel en fonction d'un résultat de comparaison, de manière à focaliser précisément l'image afin d'exclure les défauts fantômes de l'image.

2. Système d'affichage tête haute en réalité augmentée pour véhicule selon la revendication 1, dans lequel un premier instrument (11) est agencé sur un côté extérieur du tableau de bord (1), et la tête optique principale (3) de projection d'image en réalité augmentée est agencée sur une surface arrière du premier instrument (11).

3. Système d'affichage tête haute en réalité augmentée pour véhicule selon la revendication 2, dans lequel le premier instrument (11) est configuré pour être capable de translation ou de rotation.

4. Système d'affichage tête haute en réalité augmentée pour véhicule selon la revendication 1, dans lequel la plaque d'imagerie réfléchissante (2) est un pare-brise avant (21) ; ou
la plaque d'imagerie réfléchissante (2) est un film réfléchissant spéculaire fixé au pare-brise avant (21).

5. Système d'affichage tête haute en réalité augmentée pour véhicule selon la revendication 1, dans lequel le tableau de bord (1) est un tableau de bord ouvert, le chemin de lumière (5) est configuré pour être pourvu d'une encoche (51) et d'une rainure (52) sur le tableau de bord ouvert, et une pièce de verre transmettant la lumière est disposée sur l'encoche (51).

6. Système d'affichage tête haute en réalité augmentée pour véhicule selon la revendication 1, dans lequel la tête optique principale (3) de projection d'image en réalité augmentée est agencée sur une structure fixe, une structure translatable, ou une structure rotative sur le dessus de la tête d'un conducteur.

7. Système d'affichage tête haute en réalité augmentée pour véhicule selon la revendication 1, dans lequel l'hôte (4) de contrôleur tête haute en réalité augmentée a un volume fixé dans un intervalle allant de 0,2 L à 5 L.

8. Véhicule, comprenant le système d'affichage tête haute en réalité augmentée pour véhicule selon l'une quelconque des revendications 1-7.
